# EUROPÄISCHE PATENTSCHRIFT

(11) **EP 1 432 902 B1**
(45) Veröffentlichungstag und Bekanntmachung des Hinweises auf die Patenterteilung: **21.11.2007**
(21) Anmeldenummer: 02745371.1
(22) Anmeldetag: 07.06.2002
(51) Int. Cl.: F02D 41/22

(54) **VERFAHREN ZUM ERKENNEN EINER LECKAGE IM EINLASSKANAL EINES VERBRENNUNGSMOTORS UND ENTSPRECHEND EINGERICHTETER VERBRENNUNGSMOTOR**
METHOD FOR IDENTIFYING A LEAK IN THE INTAKE PORT OF AN INTERNAL COMBUSTION ENGINE AND AN INTERNAL COMBUSTION ENGINE THAT IS EQUIPPED ACCORDINGLY
PROCEDE POUR DETECTER UNE FUITE DANS LE CONDUIT D'ADMISSION D'UN MOTEUR A COMBUSTION INTERNE ET MOTEUR A COMBUSTION INTERNE EQUIPE EN CONSEQUENCE

(30) Priorität: 28.09.2001 DE 10147977
(43) Veröffentlichungstag der Anmeldung: 30.06.2004
(73) Patentinhaber: Volkswagen Aktiengesellschaft, 38436 Wolfsburg (DE)
(72) Erfinder: KIRSCHKE, Frank, 38446 Wolfsburg (DE); LINDEMANN, Kai-Uwe, 38442 Wolfsburg (DE); BERGMANN, Helge, 38126 Braunschweig (DE)
(74) Vertreter: Banzer, Hans-Jörg
(86) Internationale Anmeldenummer: PCT/EP2002/006286
(87) Internationale Veröffentlichungsnummer: WO 2003/029777

(56) Entgegenhaltungen:
- EP-A- 0 937 877
- DE-A- 4 225 495
- DE-A- 4 303 997
- DE-A- 10 028 878
- DE-A- 19 537 363
- DE-A- 19 900 740
- DE-A- 19 946 874
- DE-C- 10 065 474
- DE-C- 19 952 836
- US-A- 4 957 083
- US-A- 5 385 134
- US-A- 5 809 965

## Beschreibung

Die vorliegende Erfindung betrifft ein Verfahren zum Erkennen einer Leckage in einem Einlasskanal eines Verbrennungsmotors sowie einen Verbrennungsmotor zur Durchführung dieses Verfahren (Siehe z.B. US-A-5 385 134).

Bei heutigen Verbrennungsmotoren ist es zur Erzielung einer optimalen Leistung oder eines optimalen Verbrauchs wichtig, den Verbrennungsmotor mit einem Kraftstoff-Luft-Gemisch mit einem definierten Mischungsverhältnis zu versorgen. Ein definiertes Kraftstoff-Luft-Gemisch kann insbesondere auch erforderlich sein, wenn die Abgase mittels eines Katalysators gereinigt werden sollen. In aller Regel hängt die Funktion eines Katalysators maßgeblich vom Mischungsverhältnis des verwendeten Kraftstoff-Luft-Gemischs ab. Zur Charakterisierung der Gemisch-Zusammensetzung wurde eine Luftzahl Lambda definiert. Sie ist das Verhältnis des aktuellen Kraftstoff-Luft-Verhältnisses zum stöchiometrischen Kraftstoff-Luft-Verhältnis. Bei einem Lambda-Wert von 1 ist der Kraftstoff mit gerade soviel Luft gemischt, wie zu seiner Verbrennung erforderlich ist. Für die heutzutage verwendeten Katalysatoren muss der Motor in einem sehr engen Bereich bzw. einem Katalysatorfenster betrieben werden, in dem der Lambda-Wert möglichst genau 1 beträgt.

Um den Lambda-Wert des Kraftstoff-Luft-Gemisches möglichst genau einhalten zu können, ist es bekannt, Verbrennungsmotoren mit einer Lambda-Regelung zu betreiben. Dabei wird zum einen mit einem Luftmassenmesser die in den Verbrennungsmotor hineinströmende Luft und zum anderen mit wenigstens einer Lambda-Sonde der Sauerstoffgehalt des Abgases ermittelt, das den Verbrennungsmotor nach der Verbrennung des Kraftstoffs verlässt. Aus diesen beiden Größen ermittelt eine Steuerung die zugeführte Kraftstoffmenge. Um den angestrebten Lambda-Wert auch bei Lastwechseln möglichst gut einhalten zu können, wird in der Steuerung die benötigte Kraftstoffmenge anhand von zwei Mechanismen ermittelt. Zum einen wird aus der Masse der einströmenden Luft die Kraftstoffmenge berechnet, die mit der einströmenden Luftmasse die gewünschte Luftzahl ergibt. Auf diese Weise kann sehr schnell auf Lastwechsel bzw. auf Änderungen der einströmenden Luftmasse reagiert werden. Nachteiligerweise erfolgt jedoch bei diesem Mechanismus keine Rückmeldung, ob tatsächlich der gewünschte Lambda-Wert erreicht wird. So kann beispielsweise auf Grund unterschiedlicher Kraftstoffgüten bzw. Kraftstoffzusammensetzungen bei gleichbleibendem Kraftstoff-Luft-Verhältnis die Luftzahl des Gemisches schwanken. Um Schwankungen infolge unterschiedlicher Kraftstoffzusammensetzungen oder Ungenauigkeiten bei der Bestimmung der einströmenden Luftmasse auszugleichen, ist eine überlagerte Lambda-Regelung vorgesehen, die die Menge des zugeführten Kraftstoffs in Abhängigkeit des am Auslass des Motors gemessenen Lambda-Werts beeinflusst. Die Ermittlung der Kraftstoffmenge in Abhängigkeit der einströmenden Luftmasse stellt somit eine Steuerung dar, wohingegen die Beeinflussung der Kraftstoffmenge in Abhängigkeit des gemessenen Lambda-Werts eine Regelung mit geschlossenem Regelkreis darstellt.

Idealerweise muss die Lambda-Regelung die Kraftstoffmenge nur noch wenig oder gar nicht beeinflussen, wenn die bei bestimmter einströmender Luftmasse zur Erzielung des gewünschten Lambda-Werts erforderliche Kraftstoffmenge genau zugeteilt wird.

Dabei ist es von großer Bedeutung, dass die in den Motor einströmende Luftmasse genau bestimmt wird. Aus diesem Grund ist es wichtig, Leckagen im Einlasskanal des Verbrennungsmotors zu erkennen. Weiterhin ist an den Einlasskanal oft eine Kurbelgehäuse-Entlüftung angeschlossen, so dass bei einer fehlerhaften Verbindung zwischen dem Einlasskanal und der Kurbelgehäuse-Entlüftung eine Leckage im-Einlasskanal entsteht, die zu einer Fehlfunktion des Verbrennungsmotors führen kann.

Aufgabe der vorliegenden Erfindung ist es, ein Verfahren sowie einen Verbrennungsmotor zu schaffen, bei denen eine Leckage im Einlasskanal des Verbrennungsmotors mit geringem Aufwand erkannt werden kann.

Erfindungsgemäß wird diese Aufgabe durch ein Verfahren mit den Merkmalen des Anspruchs 1 bzw. einen Verbrennungsmotor mit den Merkmalen des Anspruchs 12 gelöst. Die Unteransprüche definieren jeweils bevorzugte und vorteilhafte Ausführungsformen der vorliegenden Erfindung.

Erfindungsgemäß wird davon ausgegangen, dass in Abhängigkeit der ermittelten einströmenden Luftmasse die zum Erreichen des gewünschten Lambda-Werts erforderliche Kraftstoffmenge im Wesentlichen richtig zudosiert wird. Falls unter diesen Voraussetzungen die Lambda-Regelung besonders stark eingreifen muss, um den gewünschten Lambda-Wert zu erreichen, kann dies als Hinweis verwendet werden, dass in den Verbrennungsmotor mehr Luft als die ermittelte Luftmasse einströmt und somit eine Leckage im Einlasskanal des Verbrennungsmotors vorliegt. Dieses Verfahren ist grundsätzlich unabhängig von dem angestrebten Lambda-Wert einsetzbar. Es kann sowohl bei einem Magerbetrieb des Verbrennungsmotors verwendet werden, bei dem der Sollwert des Lambda-Werts über 1 liegt, und auch bei dem derzeit am häufigsten verwendeten Regelungsverfahren, bei dem ein Lambda-Wert von 1 angestrebt wird. In einem besonders einfachen Ausführungsbeispiel der Erfindung kann das Auswertesignal gleich dem Stellsignal der Lambda-Regelung sein.

Vorteilhafterweise wird dieses Verfahren in einem Betriebsabschnitt des Verbrennungsmotors durchgeführt, in dem keine Lastwechsel auftreten. Dies kann insbesondere der Betrieb im Leerlauf sein. Auf diese Weise wird ein stationärer Zustand der Regelung erreicht, in dem keine Störungen durch Einschwingvorgänge der Regelung bzw. Steuerung auftreten.

Dabei können in der Lambda-Regelung verschiedene Adaptionswerte verwendet werden, die in bestimmten Lernphasen ermittelt werden und zur Beeinflussung des Stellsignals der Lambda-Regelung verwendet werden. Solche Adaptionswerte können dazu verwendet werden, um bei der Bestimmung der Kraftstoffmenge einen Stelleingriff zu erzielen, dessen Notwendigkeit von vornherein bekannt ist. Die zugeteilte Kraftstoffmenge kann dann anhand der Adaptionswerte und des Werts des Lambda-Reglers berechnet werden. Beispielsweise kann auf diese Weise berücksichtigt werden, wenn der verwendete Kraftstoff eine besonders niedrige Güte aufweist, so dass eine höhere Kraftstoffmenge zugeteilt werden muss. Mit Hilfe der Adaptionswerte kann erreicht werden, dass der Lambda-Regler immer in einem optimalen Arbeitsbereich und insbesondere um die Neutrallage herum betrieben werden kann. Die Adaptionswerte können sowohl multiplikative als auch additive Adaptionswerte sein. Ein additiver Adaptionswert kann insbesondere verwendet werden, um im Leerlaufbetrieb oder bei sehr geringer Last einen korrekten Betrieb des Verbrennungsmotors zu erreichen. Ein multiplikativer Adaptionswert kann insbesondere im Teillastbereich verwendet werden.

Werden Adaptionswerte verwendet, müssen diese bei der Durchführung des erfindungsgemäßen Verfahrens berücksichtigt werden. Das Auswertesignal setzt sich dann zusammen aus dem Stellsignal der Lambda-Regelung und Korrekturfaktoren, die von den gegebenenfalls vorhandenen und aktiven Adaptionswerten abhängen. Dabei wird für jeden Adaptionswert jeweils ein Korrekturwert erzeugt, wobei sowohl für jeden multiplikativen als auch für jeden additiven Adaptionswert ein Korrekturwert erzeugt wird, der multiplikativ wirkt. Um für einen additiven Adaptionswert einen multiplikativen Korrekturwert zu erzeugen, muss eine entsprechende Berechnungsvorschrift verwendet werden. Dazu kann auch ein additiver Adaptionswert zunächst in einen multiplikativen Wert umgewandelt werden.

Weiterhin ist es denkbar, nicht die Absolutwerte der Adaptionswerte bei der Bildung des Auswertesignals zu nutzen, sondern die Änderungen der Gemisch-Adaptionswerte zu verwenden.

Ebenso können Korrekturfaktoren eingeführt werden, die in Abhängigkeit der Höhe, auf der der Verbrennungsmotor betrieben wird, bzw. der Temperatur des Verbrennungsmotors erzeugt werden.

Zur Erkennung einer Leckage bzw. zur Auswertung des Auswertesignals kann ein Zeitfenster definiert werden, innerhalb dessen die Erkennung durchgeführt wird. Dabei wird eine erste Zeitdauer gemessen, in der das Auswertesignal oberhalb eines oberen Grenzwerts liegt und eine zweite Zeitdauer, in der das Auswertesignal unterhalb eines unteren Grenzwerts liegt. Anschließend kann die Zeitdifferenz zwischen diesen beiden Zeitdauern ermittelt werden und auf die Dauer des Messfensters bezogen werden, um eine dimensionslose Bezugsgröße zu erhalten.

Wenn nun keine Leckage auftritt, dann überschreitet das Auswertesignal den Grenzwert nicht oder nur für sehr geringe Zeit. Die zweite Zeitdauer ist somit wesentlich größer als die erste Zeitdauer, so dass sich eine negative Differenz ergibt, die auf die Messfensterlänge bezogen einen Wert von nahezu -1 ergibt. Im Fall einer Leckage liegt das Auswertesignal wesentlich länger über dem Grenzwert, so dass sich eine große positive Differenz der beiden Zeitdauern ergibt, die maximal gleich der Länge des Messfensters sein kann. Nach der Beziehung auf die Messfensterlänge ergibt sich in so einem Fall ein Wert von nahezu +1. Vorteilhafterweise wird als endgültige Fehlerschwelle ein Wert von 0,8 eingeführt.

Vorteilhafterweise wird jedoch während des Diagnoseablaufs zur Leckerkennung ständig die Differenz zwischen den zwei Zeitdauern berechnet und auf die aktuelle Messfensterzeit bezogen. Auf diese Weise liegt während des Diagnoseablaufs bereits von Anfang an ein Wert für die Bezugsgröße vor. Der Vergleich zwischen der dimensionslosen Bezugsgröße und der Fehlerschwelle kann in so einem Fall auch nach einer Mindestmesszeit erfolgen, die kleiner als die Messfensterlänge sein kann. Bei eindeutiger Fehlersituation wird so eine sehr schnelle Fehlererkennung möglich.

Der untere und der obere Grenzwert können gleich sein, können aber auch durch einen Sicherheitsabstand zur Vermeidung von Fehldiagnosen getrennt sein. Liegt man mit dem Auswertesignal zwischen den Schwellen, sinkt wegen der Bezugnahme auf die stetig steigende Messfensterzeit der Wert der dimensionslosen Bezugsgröße, so dass man sich von einem möglicherweise ungerechtfertigten Fehlereintrag entfernt.

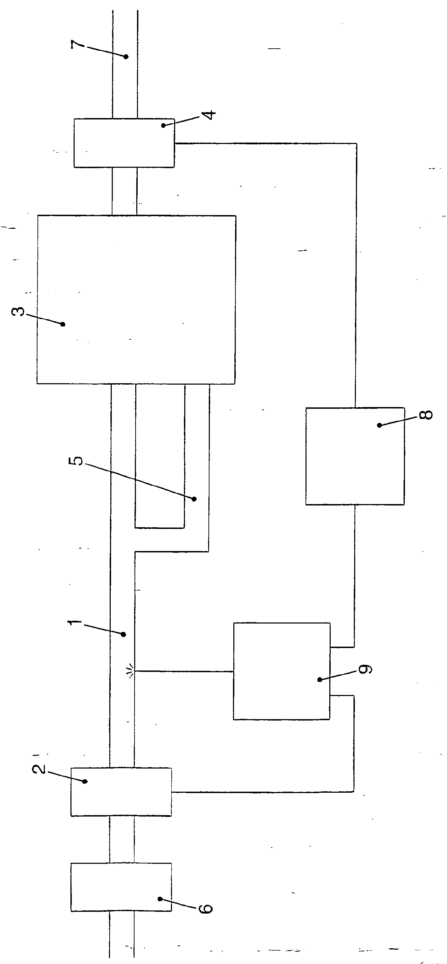

Die Erfindung wird nachfolgend anhand eines bevorzugten Ausführungsbeispiels unter Bezugnahme auf die beigefügte Zeichnung näher erläutert.

Die Figur zeigt dabei den schematischen Aufbau eines Verbrennungsmotors zusammen mit den zur Durchführung des erfindungsgemäßen Verfahrens notwendigen Komponenten gemäß dem Ausführungsbeispiel der vorliegenden Erfindung.

In dem Funktionsschema sind ein Verbrennungsmotor 3 mit einem Einlasskanal 1 und einem Auslasskanal 7 dargestellt. Durch den Einlasskanal 1 wird die zur Verbrennung notwendige Luft angesaugt, wohingegen durch den Auslasskanal 7 die Verbrennungsgase ausgestoßen werden.

Im Einlasskanal 1 ist zuvorderst ein Luftfilter 6 zur Reinigung der einströmenden Luft und anschließend ein Luftmassenmesser 2 angeordnet. Der Luftmassenmesser 2 ermittelt die in den Einlasskanal 1 je Zeiteinheit einströmende Luftmasse.

Der Verbrennungsmotor 3 ist ein Kolbenmotor mit einem Kurbelgehäuse, dem eine Kurbelgehäuse-Entlüftung 5 zugeordnet ist. Die Kurbelgehäuse-Entlüftung 5 dient dazu, Kraftstoffdämpfe, die am Kolben vorbei in das Kurbelgehäuse gelangt sind, wieder abzusaugen. Dazu ist die Kurbelgehäuse-Entlüftung 5 mit dem Einlasskanal 1 verbunden.

Im Auslasskanal 7 ist eine Lambda-Sonde 4 angeordnet, um den Sauerstoffgehalt der Verbrennungsgase zu messen.

Weiterhin ist eine Lambda-Regelung 8 und eine Steuereinrichtung 9 vorgesehen, um die zum Betrieb des Verbrennungsmotors 3 erforderliche Kraftstoffmenge zu bestimmen. Die Steuereinrichtung 9 ist dazu mit dem Luftmassenmesser 2 verbunden, der das Ergebnis der Luftmassenmessung an die Steuereinrichtung 9 leitet. Die Steuereinrichtung 9 erhält weiterhin ein Stellsignal von der Lambda-Regelung 8, die wiederum mit der Lambda-Sonde 4 verbunden ist. Die Lambda-Regelung 8 ist so ausgelegt, dass sie mit Hilfe des an die Steuereinrichtung 9 geleiteten Stellsignals das in den Verbrennungsmotor 3 einströmende Kraftstoff-Luft-Gemisch so beeinflusst, dass der Sauerstoffgehalt der Verbrennungsgase einen bestimmten Sollwert einnimmt.

Die Steuereinrichtung 9 hingegen ist so eingerichtet, dass sie abhängig von der im Luftmassenmesser 2 ermittelten Luftmasse die erforderliche Kraftstoffmenge berechnet, die zum Erreichen des gewünschten Lambda-Werts erforderlich ist. Dabei wird zusätzlich das Stellsignal der Lambda-Regelung 8 berücksichtigt. Eine Überprüfung, ob mit der zugeteilten Kraftstoffmenge der angestrebte Lambda-Wert erreicht wird, wird von der Steuereinrichtung 9 nicht durchgeführt. Dies wird mit Hilfe der Lambda-Regelung 8 erreicht, die über den Eingriff in die Steuerung 9 einen geschlossenen Regelkreis bildet.

Wenn der Einlasskanal 1 keine Leckage aufweist, kann die Steuereinrichtung 9 anhand der gemessenen Luftmasse die erforderliche Kraftstoffmenge mit einer gewissen Genauigkeit berechnen. Abweichungen können sich insbesondere durch Ungenauigkeiten bei der Luftmassenmessung, Bauteilabweichungen, geänderten Verbrennungsbedingungen oder Änderungen der Kraftstoffzusammensetzung ergeben. Die Abweichungen der auf Grund der Luftmasse bestimmten Kraftstoffmenge von der idealen Kraftstoffmenge werden von der Lambda-Regelung 8 bzw. dem Stellsignal ausgeglichen. Dabei ist jedoch nur ein kleiner Stelleingriff der Lambda-Regelung 8 erforderlich, da die Steuereinrichtung 9 anhand der gemessenen Luftmasse bereits einen hinreichend guten Wert für die Kraftstoffmenge ermitteln konnte.

Wenn jedoch innerhalb des Einlasskanals 1 eine Leckage auftritt, strömt in den Verbrennungsmotor 3 mehr Luft ein, als von dem Luftmassenmesser 2 gemessen werden kann. Folge davon ist, dass die Steuereinrichtung 9 gemessen an der tatsächlich in den Verbrennungsmotor 3 einströmenden Luftmasse eine zu geringe Kraftstoffmenge zuteilt. Dies führt zu einem zu hohen Sauerstoffanteil in den Verbrennungsgasen. Die Lambda-Regelung 8 versucht daraufhin, diese Abweichung auszugleichen, indem sie mittels des Stellsignals eine Erhöhung der Kraftstoffmenge in der Steuereinrichtung 9 verursacht. Die Leckage im Einlasskanal 1 führt zu einem ungewöhnlich hohen Wert des Stellsignals, da die Lambda-Regelung 8 mittels des Stellsignals versucht, den Kraftstoffanteil für die Leckluft zuzuteilen, die von der Steuerungseinrichtung 9 zusammen mit der Luftmassenmessung nicht berücksichtigt werden konnte.

Die Steuereinrichtung 9 ist weiterhin so eingerichtet, dass sie ein Auswertesignal in Abhängigkeit des Stellsignals der Lambda-Regelung 8 erzeugen und überwachen kann. Das Auswertesignal wird von der Steuereinrichtung durch Multiplikation des Stellsignals der Lambda-Regelung 8 mit Korrekturfaktoren erzeugt. Die Korrekturfaktoren werden abhängig von der Höhe, auf der der Verbrennungsmotor 3 betrieben wird, der Temperatur des Verbrennungsmotors 3 und abhängig von Adaptionswerten erzeugt.

Die Adaptionswerte werden von der Steuereinrichtung 9 in Lernphasen erzeugt und bei der Bestimmung des Stellsignals berücksichtigt, um sich langsam ändernde mittelfristige oder langfristige Einflüsse auf die erforderliche Kraftstoffmenge zu berücksichtigen. Diese Einflüsse können beispielsweise die Kraftstoffqualität, Bauteiltoleranzen oder sich ändernde Verbrennungsbedingungen sein. Mit Hilfe der Adaptionswerte ist es möglich, das Stellsignal der Lambda-Regelung 8 in einem optimalen Bereich und insbesondere in der Nähe der Neutrallage zu halten. Von der Steuereinrichtung 9 werden sowohl additive, bei der Stellsignalbestimmung additiv berücksichtigte als auch multiplikative, bei der Stellsignalbestimmung multiplikativ berücksichtigte Adaptionswerte erzeugt, wobei die additiven Adaptionswerte im Leerlaufbetrieb und die multiplikativen Adaptionswerte im Teillastbereich verwendet werden.

Zur Auswertung des Auswertesignals ist in der Steuereinrichtung 9 in einer Leerlaufphase des Verbrennungsmotors 3 ein Messfenster mit einer Dauer von 8 Sekunden vorgesehen. Während der Dauer dieses Messfensters überwacht die Steuereinrichtung 9, ob das Auswertesignal der Lambda-Regelung 8 einen oberen Grenzwert überschreitet oder einen unteren Grenzwert unterschreitet. Die Steuereinrichtung 9 misst dabei eine erste Zeitdauer, in der das Auswertesignal den oberen Grenzwert überschreitet, und eine zweite Zeitdauer, in der der untere Grenzwert unterschritten wird. Die Zeitdauer, in der das Auswertesignal zwischen diesen beiden Grenzwerten liegt, wird außer Acht gelassen. Auf diese Weise kann erreicht werden, dass in unsicheren Fällen eine fehlerhafte Erkennung einer Leckage im Einlasskanal 1 nicht erfolgt.

Während der Dauer des Messfensters wird ständig die zweite Zeitdauer von der ersten Zeitdauer subtrahiert und die erhaltene Differenz auf die verstrichene Zeitdauer des Messfensters bezogen. Das Ergebnis ist ein Verhältnis, das sich je nach den beiden Zeitdauern zwischen -1 und +1 bewegt. Dieses Verhältnis wird ab einer Mindestmesszeit von insbesondere 4 Sekunden mit einer Fehlerschwelle, deren Wert 0,8 beträgt, verglichen und ein Fehlersignal erzeugt, wenn das Verhältnis über der Fehlerschwelle liegt.

Auf eine Leckage in Einlasskanal 1 wird demnach dann erkannt, wenn das Auswertesignal der Lambda-Regelung 8 lange Zeit über dem oberen Grenzwert lag, d. h., die Lambda-Regelung 8 über einen langen Zeitraum versucht, zusätzlichen Kraftstoff zuzumessen.

### BEZUGSZEICHENLISTE

- 1: Einlasskanal
- 2: Luftmassenmesser
- 3: Verbrennungsmotor
- 4: Lambdasonde
- 5: Kurbelgehäuseentlüftung
- 6: Luftfilter
- 7: Auslasskanal

## Patentansprüche

1. Verfahren zum Erkennen einer Leckage in einem Einlasskanal (1) eines Verbrennungsmotors (3), bei dem eine zugeführte Kraftstoffmenge in Abhängigkeit einer den Einlasskanal (1) an einer Luftmassenmesstelle (2) durchströmende Luftmasse und eines Stellsignals einer Lambda-Regelung (8) bestimmt wird, die den Sauerstoffgehalt des Abgases des Verbrennungsmotors (3) nach der Verbrennung misst und das Stellsignal derart beeinflusst, dass der Sauerstoffgehalt des Abgases einen bestimmten Wert annimmt, und bei dem ein Auswertesignal in Bezug auf das Überschreiten bzw. Unterschreiten eines Grenzwerts überwacht wird, wobei das Auswertesignal in Abhängigkeit des Stellsignals der Lambda-Regelung (8) erzeugt wird, **dadurch gekennzeichnet, dass** das Auswertesignal durch Multiplikation des Stellsignals des Lambda-Reglers (8) mit wenigstens einem Korrekturwert erzeugt wird, der in Abhängigkeit der Änderung wenigstens eines Adaptionswerts erzeugt wird, der von der Lambda-Regelung (8) in bestimmten Betriebsphasen des Verbrennungsmotors (3) erzeugt und zur Beeinflussung des Stellsignals der Lambda-Regelung (8) verwendet wird.

2. Verfahren nach Anspruch 1, **dadurch gekennzeichnet, dass** die Abhängigkeit der zugeführten Kraftstoffmenge von der einströmenden Luftmasse ein bestimmtes stöchiometrisches Verhältnis zwischen der Luftmasse und der Kraftstoffmenge ist.

3. Verfahren nach einem der vorhergehenden Ansprüche, **dadurch gekennzeichnet, dass** die Erkennung einer Leckage in dem Einlasskanal (1) während des Leerlaufs des Verbrennungsmotors (3) durchgeführt wird.

4. Verfahren nach einem der vorhergehenden Ansprüche, **dadurch gekennzeichnet, dass** ein multiplikativer Adaptionswert erzeugt wird, der bei der Bestimmung des Stellsignals multiplikativ wirkt.

5. Verfahren nach einem der vorhergehenden Ansprüche, **dadurch gekennzeichnet, dass** ein additiver Adaptionswert erzeugt wird, der bei der Bestimmung des Stellsignals additiv wirkt.

6. Verfahren nach einem der vorhergehenden Ansprüche, **dadurch gekennzeichnet, dass** das Auswertesignal durch Multiplikation des Stellsignals des Lambda-Reglers (8) mit einem Höhenkorrekturwert erzeugt wird, der in Abhängigkeit der Höhe erzeugt wird, auf der sich der Verbrennungsmotor (3) befindet.

7. Verfahren nach einem der vorhergehenden Ansprüche, **dadurch gekennzeichnet, dass** das Auswertesignal durch Multiplikation des Stellsignals des Lambda-Reglers (8) mit einem Temperaturkorrekturwert erzeugt wird, der in Abhängigkeit der Temperatur des Verbrennungsmotors (3) erzeugt wird.

8. Verfahren nach einem der vorhergehenden Ansprüche, **dadurch gekennzeichnet, dass** während der Zeitdauer eines Messfensters eine erste Zeitdauer gemessen wird, in der das Auswertesignal den Grenzwert überschreitet, und eine zweite Zeitdauer ermittelt wird, in der das Stellsignal den Grenzwert unterschreitet, die Differenz zwischen der ersten und der zweiten Zeitdauer auf die verstrichene Zeitdauer des Messfensters zur Gewinnung einer Bezugsgröße bezogen wird und zum Erkennen einer Leckage in dem Einlasskanal (1) die Bezugsgröße mit einer Fehlerschwelle verglichen wird.

9. Verfahren nach Anspruch 8, **dadurch gekennzeichnet, dass** die Gesamtzeitdauer des Messfensters 8 Sekunden dauert und eine Erkennung einer Leckage erst nach einer Mindestzeitdauer von 4 Sekunden zugelassen wird.

10. Verbrennungsmotor (3) mit einem Einlasskanal (1), einer Steuereinrichtung (9) und einer Lambda-Regelung (8), wobei die Steuereinrichtung (9) derart eingerichtet ist, dass sie die den Einlasskanal (1) durchströmende Luftmasse mittels eines Luftmassenmessers (2) ermittelt und eine zugeführte Kraftstoffmenge in Abhängigkeit der ermittelten Luftmasse und eines Stellsignals der Lambda-Regelung (8) bestimmt, und die Lambda-Regelung (8) derart eingerichtet ist, dass sie den Sauerstoffgehalt des Gases des Verbrennungsmotors (3) mittels einer Lambdasonde (4) misst und das Stellsignal derart beeinflusst, dass der Sauerstoffgehalt einen bestimmten Wert annimmt, und die Steuereinrichtung (9) weiterhin derart eingerichtet ist, dass sie ein Auswertesignal in Abhängigkeit des Stellsignals der Lambda-Regelung (8) erzeugt und in Bezug auf das Überschreiten bzw. Unterschreiten eines Grenzwerts überwacht, **dadurch gekennzeichnet, dass** die Steuereinrichtung (9) weiterhin derart eingereichtet ist, dass sie das Auswertesignal durch Multiplikation des Stellsignals der Lambda-Regelung (8) mit wenigstens einem Korrekturwert erzeugt, der in Abhängigkeit der Änderung wenigstens eines Adaptionswerts erzeugt wird.

11. Verbrennungsmotor nach Anspruch 10, **dadurch gekennzeichnet, dass** die Steuereinrichtung (9) zur Durchführung des Verfahrens nach einem der Ansprüche 1-9 eingerichtet ist.

## Claims

1. Method for detection of a leak in an intake manifold (1) of an internal combustion engine (3), in which method a supplied amount of fuel is determined as a function of an air mass flowing through the intake manifold (1) at an air mass measurement site (2) and a reference signal of a lambda control (8), which lambda control (8) measures the oxygen content of the exhaust gas of the internal combustion engine (3) after combustion and influences the reference signal such that the oxygen content of the exhaust gas assumes a certain value, and in which method an evaluation signal is monitored with regard to the exceedance or falling short of a limit value, wherein the evaluation signal is generated as a function of the reference signal of the lambda control (8), **characterized in that** the evaluation signal is generated by multiplication of the reference signal of the lambda controller (8) by at least one correction value, which is generated as a function of the change of at least one adaptation value that is generated by the lambda control (8) in specific operating phases of the internal combustion engine (3) and is used to influence the reference signal of the lambda control (8).

2. Method according to Claim 1, **characterized in that** the dependence of the supplied amount of fuel on the inflowing air mass is a specified stoichiometric ratio between the air mass and fuel amount.

3. Method according to any one of the preceding claims, **characterized in that** the detection of a leak in the intake manifold (1) is carried out during idle running of the internal combustion engine (3).

4. Method according to any one of the preceding claims, **characterized in that** a multiplicative adaptation value is generated that has a multiplicative effect during the determination of the reference signal.

5. Method according to any one of the preceding claims, **characterized in that** an additive adaptation value is generated that acts additively during the determination of the reference signal.

6. Method according to any one of the preceding claims, **characterized in that** the evaluation signal is generated by multiplication of the reference signal of the lambda controller (8) with a height correction value that is generated as a function of the height at which the internal combustion engine (3) is situated.

7. Method according to any one of the preceding claims, **characterized in that** the evaluation signal is generated by multiplication of the reference signal of the lambda controller (8) with a temperature correction value that is generated as a function of the temperature of the internal combustion engine (3).

8. Method according to any one of the preceding claims, **characterized in that**, during the time period of a measurement window, a first time period is measured, in which the evaluation signal exceeds the limit value, and a second time period is determined, in which the reference signal falls short of the limit value, the difference between the first and the second time periods is related to the elapsed time period of the measurement window to obtain a reference quantity, and the reference quantity is compared with an error threshold to detect a leak in the intake manifold (1).

9. Method according to Claim 8, **characterized in that** the total time period of the measurement window lasts 8 seconds and detection of a leak is only permitted after a minimum time period of 4 seconds.

10. Internal combustion engine (3) having an intake manifold (1), a control device (9) and a lambda control (8), wherein the control device (9) is set up such that it determines the air mass flowing through the intake manifold (1) by means of an air mass meter (2) and determines a supplied amount of fuel as a function of the determined air mass and a reference signal of the lambda control (8), and the lambda control (8) is set up such that it measures the oxygen content of the gas of the internal combustion engine (3) by means of a lambda probe (4) and influences the reference signal such that the oxygen content assumes a specific value, and the control device (9) is furthermore set up such that it generates an evaluation signal as a function of the reference signal of the lambda control (8) and monitors said evaluation signal with regard to the exceedance or falling short of a limit value, **characterized in that** the control device (9) is furthermore set up such that it generates the evaluation signal by multiplication of the reference signal of the lambda control (8) by at least one correction value which is generated as a function of the change of at least one adaptation value.

11. Internal combustion engine according to Claim 10, **characterized in that** the control device (9) is set up to carry out the method according to any one of Claims 1-9.

## Revendications

1. Procédé pour détecter une fuite dans un conduit d'admission (1) d'un moteur à combustion interne (3), dans lequel on détermine une quantité de carburant fournie en fonction d'une masse d'air circulant dans le canal d'admission (1) en un point de mesure de la masse d'air (2) et d'un signal de réglage d'une régulation lambda (8), qui mesure la teneur en oxygène des gaz d'échappement du moteur à combustion interne (3) après la combustion et influence le signal de réglage de telle manière que la teneur en oxygène des gaz d'échappement prenne une valeur déterminée, et dans lequel on surveille un signal d'exploitation en ce qui concerne un dépassement vers le haut ou vers le bas d'une valeur limite, dans lequel on produit le signal d'exploitation en fonction du signal de réglage de la régulation lambda (8), **caractérisé en ce qu'**on produit le signal d'exploitation par multiplication du signal de réglage du régulateur lambda (8) par au moins une valeur de correction, qui est produite en fonction de la variation d'au moins une valeur d'adaptation, qui est produite par la régulation lambda (8) dans des phases de fonctionnement déterminées du moteur à combustion interne (3) et qui est utilisée pour influencer le signal de réglage de la régulation lambda (8).

2. Procédé selon la revendication 1, **caractérisé en ce que** la relation de dépendance entre la quantité de carburant fournie et la masse d'air admise est un rapport stoechiométrique déterminé entre la masse d'air et la quantité de carburant.

3. Procédé selon l'une quelconque des revendications précédentes, **caractérisé en ce que** l'on effectue la détection d'une fuite dans le canal d'admission (1) pendant la marche au ralenti du moteur à combustion interne (3).

4. Procédé selon l'une quelconque des revendications précédentes, **caractérisé en ce que** l'on produit une valeur d'adaptation multiplicative, qui agit par multiplication lors de la détermination du signal de réglage.

5. Procédé selon l'une quelconque des revendications précédentes, **caractérisé en ce que** l'on produit une valeur d'adaptation additive, qui agit par addition lors de la détermination du signal de réglage.

6. Procédé selon l'une quelconque des revendications précédentes, **caractérisé en ce que** l'on produit le signal d'exploitation par multiplication du signal de réglage du régulateur lambda (8) par une valeur de correction d'altitude, qui est produite en fonction de l'altitude à laquelle le moteur à combustion interne (3) se trouve.

7. Procédé selon l'une quelconque des revendications précédentes, **caractérisé en ce que** l'on produit le signal d'exploitation par multiplication du signal de réglage du régulateur lambda (8) par une valeur de correction de température, qui est produite en fonction de la température du moteur à combustion interne (3).

8. Procédé selon l'une quelconque des revendications précédentes, **caractérisé en ce que**, pendant la durée d'une fenêtre de mesure, on mesure une première durée pendant laquelle le signal d'exploitation est supérieur à la valeur de seuil et on détermine une deuxième durée pendant laquelle le signal de réglage est inférieur à la valeur de seuil, la différence entre la première durée et la deuxième durée est rapportée à la durée écoulée de la fenêtre de mesure pour obtenir une grandeur de référence, et la grandeur de référence est comparée à un seuil de défaut pour détecter une fuite dans le canal d'admission (1).

9. Procédé selon la revendication 8, **caractérisé en ce que** la durée totale de la fenêtre de mesure dure 8 secondes et une détection d'une fuite n'est autorisée qu'après une durée minimale de 4 secondes.

10. Moteur à combustion interne (3) comportant un canal d'admission (1), un dispositif de commande (9) et une régulation lambda (8), dans lequel le dispositif de commande (9) est réalisé de telle manière qu'il détermine la masse d'air circulant dans le canal d'admission (1) au moyen d'un compteur de masse d'air (2) et qu'il détermine une quantité de carburant fournie en fonction de la masse d'air déterminée et d'un signal de réglage de la régulation lambda (8), et la régulation lambda (8) est réalisée de telle manière qu'elle mesure la teneur en oxygène des gaz du moteur à combustion interne (3) au moyen d'une sonde lambda (4) et qu'elle influence le signal de réglage de telle manière que la teneur en oxygène prenne une valeur déterminée, et le dispositif de commande (9) est en outre réalisé de telle manière qu'il produise un signal d'exploitation en fonction du signal de réglage de la régulation lambda (8) et qu'il le surveille en ce qui concerne un dépassement vers le haut ou vers le bas d'une valeur limite, **caractérisé en ce que** le dispositif de commande (9) est en outre réalisé de telle manière qu'il produise le signal d'exploitation par multiplication du signal de réglage de la régulation lambda (8) par au moins une valeur de correction, qui est produite en fonction de la variation d'au moins une valeur d'adaptation.

11. Moteur à combustion interne selon la revendication 10, **caractérisé en ce que** le dispositif de commande (9) est réalisé de façon à exécuter le procédé selon l'une quelconque des revendications 1 à 9.
